# EUROPEAN PATENT SPECIFICATION

(11) **EP 0 289 005 B1**
(45) Date of publication and mention of the grant of the patent: **02.03.1994**
(21) Application number: 88106765.6
(22) Date of filing: 27.04.1988
(51) Int. Cl.: H04N 1/32, H04N 1/38

(54) **Facsimile device**
Faksimilevorrichtung
Dispositif de fac-similé

(30) Priority: 28.04.1987 JP 105615/87; 27.05.1987 JP 130608/87; 27.07.1987 JP 188146/87; 31.07.1987 JP 193144/87
(43) Date of publication of application: 02.11.1988
(73) Proprietor: SHARP KABUSHIKI KAISHA, Osaka 545 (JP)
(72) Inventor: Tatsumi, Takashi, Osaka-shi Osaka-fu (JP)
(74) Representative: TER MEER STEINMEISTER & PARTNER GbR

(56) References cited:
- EP-A- 0 262 603
- DE-C- 3 039 503
- US-A- 4 524 393
- US-A- 4 679 093

## Description

The present invention relates to a facsimile device.

In principle, there are two different ways for scanning a document for reading image data which shall be transmitted from the transmitting facsimile device via a telephone circuit to a receiving facsimile device. The first way is to move the document by using a stationary reading means, whereas the other way is to place the document on a stationary document scanning plate and to move the reading means. The present invention is related to a facsimile device using the second way.

When moving the document, it is automatically detected whether a next document is provided after the document which has just been scanned. When no further document ist provided, the telephone circuit is cut.

On the contrary, in a facsimile device of the type in which the document is stationarily placed on a document scanning plate, some time elapses before it can be determined whether another document shall be scanned or not. During the time period, in which no document is scanned, the facsimile device does not send any transmission data. When no transmission data have been sent for a predetermined period of time, the telephone circuit is cut. This means that the telephone circuit may be cut undesirably during replacement of documents, in case that a former document is not replaced fast enough to a new one. In this case, an operator needs to dial again the number of the receiving facsimile device.

The document DE-C2-30 39 503 describes a facsimile device comprising the features (b) - (g) of claim 1. In one mode of this device, a sort of false fillbit signal is generated which lasts continuously during the scanning of a multisheet document. However, this signal is produced only once during the scanning operation and not always after every sheet has been scanned. The purpose of this signal is to prevent the cutting of a role of paper in the receiver after each transmitted sheet of the document. In another mode, in which said sort of false fillbit signal is not generated, a signal indicating the end of a scanned sheet is transmitted after each sheet is scanned, and the receiver cuts the role of paper when receiving this sheet end indicating signal.

It is the object of the present invention to provide a facsimile device for transmitting original documents which are stationarily placed on a document scanning plate, which device is capable of holding the telephone circuit during the time period which is required for replacement of documents.

The facsimile device of the present invention is defined by the teaching of claim 1.

When using a conventional transmitting facismile device, the telephone circuit will be cut by either the transmitting or the receiving device as soon as a certain period of time has elapsed in which no image data have been sent, i. e. after the end of the transmission of a document has been reached. Also when using a transmitting facsimile device of the present invention, the telephone circuit will be cut after said predetermined period of time, however, this period of time does not start with the end of the transmission of a document, but it starts only after another period of time has elapsed. This other period of time starts from the time instant at which the end of the document has been detected. Beginning with this time instant, false fillbit signals are transmitted to keep the telephone circuit busy for said other predetermined period of time.

These and other objects and features of the present invention will become more apparent from the following description taken in conjunction with the preferred embodiment thereof with reference to the accompanying drawings, throughout which like parts are designated by like reference numerals, and which:
Fig. 1 is a perspective view of a facsimile device according to an embodiment of the present invention;
Fig. 2 is a block diagram of the facsimile device of Fig. 1;
Fig. 3 is a flow-chart showing the operation of the facsimile device of Fig. 1;
Fig. 4 is a block diagram showing one example of an information means provided in the facsimile device of Fig. 1;
Fig. 5 is a view similar to Fig. 1, which particularly shows a modification thereof; and
Fig. 6 is a flow-chart showing the operation of the facsimile device of Fig. 5.

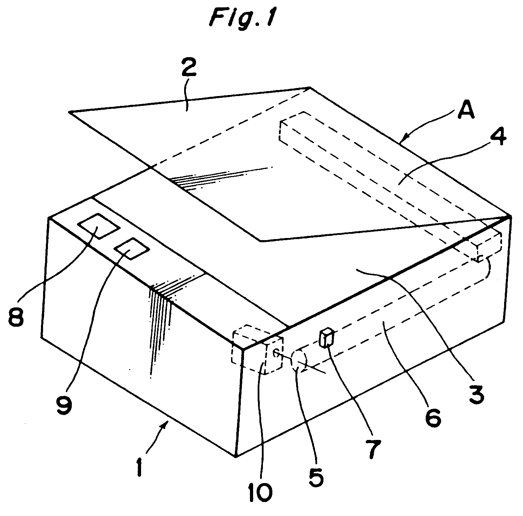

Referring first to Fig. 1, a facsimile device A according to an embodiment of the present invention consists of a housing 1 and a document cover 2. The majority of the upper surface of the device housing 1 is made up of a document scanning plate 3 of a transparent plate such as glass or the like. The document cover 2 is hingedly connected at its one end with the device housing 1 and has a white surface on its one side opposing the document scanning plate 3. The device housing 1 accommodates a scanner 4 as an image reading means including a light source and a reading element of a CCD (charge coupled device) and is capable of reading one line of a document, for example, of an A4 size in a direction of the main scanning. The scanner 4 is freely movable in a direction longitudinally of the A4-sized document i.e., in a direction of the subscanning perpendicular to the direction of the main scanning by the operation of a conveying mechanism comprised of an electric motor 10, a pulley 5 coupled to the electric motor 10, an endless belt 6 and the like. The device housing 1 is provided on its one side with an end line detecting sensor 7 for detecting the end line of the document placed on the document scanning plate 3. When the scanner 4 has reached a location where the end line detecting sensor 7 is provided, the sensor 7 detects the end line of the document and generates a signal indicative of the end of the document.

It is to be noted here that the number of lines to be read may be set in advance. Under such a condition, the signal indicative of the end of a document may be generated when the lines of the document have been read in the predetermined number thereof.

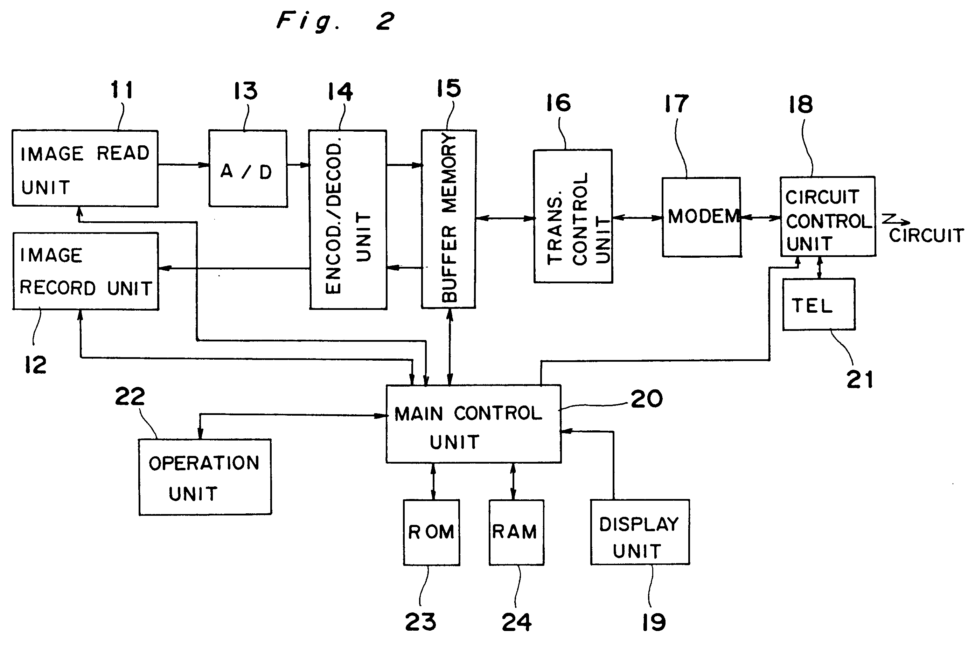

Fig. 2 illustrates a block diagram of the facsimile device according to the first embodiment of the present invention, which includes an image reading unit 11, an image record unit 12, an A/D converter 13, an encoding/decoding unit 14, a buffer memory 15, a transmission control unit 16, a MODEM (modulator and demodulator) 17, a circuit control unit 18, a display unit 19 containing a lamp flickering circuit, a main control unit 20, a telephone set 21, an operation unit 22 provided with a buzzer circuit, a sending key 8 and an information lamp 9, a ROM 23 and a RAM 24. The main control unit 20 is coupled to the image reading unit 11, the image record unit 12, the buffer memory 15, the circuit control unit 18, the display unit 19, the operation unit 22, the ROM 23 and the RAM 24. The image reading unit 11 is further coupled to the A/D converter 13 coupled to the encoding/decoding unit 14. The encoding/decoding unit 14 is further coupled to the buffer memory 15 and to the image record unit 12. The transmission control unit 16 is coupled to the buffer memory 15 and to the MODEM 17 coupled to the circuit control unit 18. The circuit control unit 18 is further coupled to the telephone set 21 and to the circuit used for the transmission.

The transmission is initiated by depressing the sending key 8 and an image signal obtained by the image reading unit 11 is converted by the A/D converter 13 into a digital signal. The image signal is then encoded by the encoding unit 14 to be successively stored into the buffer memory 15 so that it may be sent to the circuit by way of the transmission control unit 16, the MODEM 17 and the circuit control unit 18.

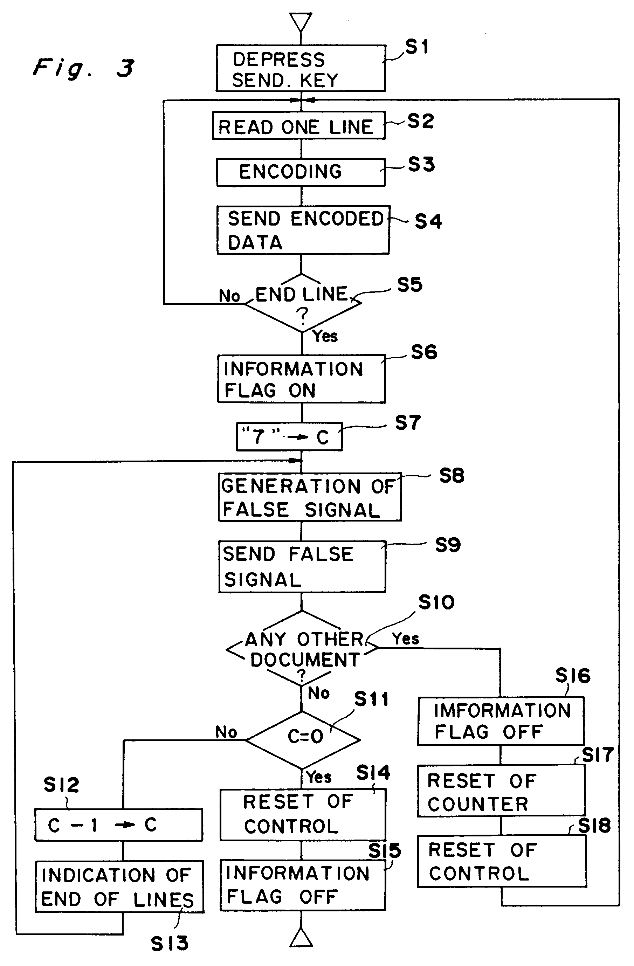

When a series of image data obtained by the image reading unit 11 have been completely sent, the buzzer circuit contained in the operation unit 22 causes the buzzer to sound and the lamp flickering circuit contained in the display unit 19 causes the lamp 9 to flicker. Thus, an operator is urged to replace the document placed on the document scanning plate 3 by the next document to resume the transmission by the operation of the operation unit 22. In the event of replacement of the documents, the main control unit 20 executes the control as shown in a flow-chart of Fig. 3.

More specifically, after the main control unit 20 has detected the end line of the document to be transmitted, the circuit is required to be held during the replacement of the documents. To this end, the main control unit 20 sends a false signal indicative of the lines of a predetermined number in response to an end line detecting signal. The predetermined number of the lines is limited in advance, for example, to seven.

Referring next to the flow-chart of Fig. 3, the operation of the facsimile device A of the present invention will be explained hereinafter.

The transmission is initiated by depressing the sending key 8 at step s1 followed by step s2 at which the image of one line is read by the image reading unit 11. The data indicative of the image of one line are encoded by the encoding unit 14 at step s3 followed by step s4 at which the encoded data are sent to the circuit. At step s5, it is judged by the end line detecting sensor 7 whether or not the line data obtained by the image reading unit 11 indicate the end line. If the line data do not indicate the end line at step s5, the procedure returns to step s2 from which the image data of respective lines are successively sent to the circuit. If the end line detecting sensor 7 has detected the end line, the procedure proceeds to step s6 at which the scanner 4 returns to its primary position and turns an information flag on. When the information flag has been turned on, the information lamp 9 is lit up and the buzzer sounds.

The procedure then proceeds to step s7 at which a counter C is initially set to "7". A false signal indicative of an unreal one line is generated at step s8 and sent to the circuit at step s9 by utilizing fillbits in order to hold the circuit. It is judged at step s10 whether or not any other document to be transmitted remains. The judgment at step s10 is executed on the basis of the presence or absence of a signal for transmitting the next document, which signal is sent by the sending key 8 into the main control unit 20. When no signal to be inputted by the sending key 8 has been found out at step s10, the procedure proceeds to step s11 at which it is judged whether or not a plurality of false signals corresponding to the predetermined number of the unreal lines have been sent. In this embodiment, the number of the unreal lines is initially set to the maximum value i.e., seven as described above, and therefore, this number is set in advance in the counter C. Accordingly, the judgment at step s11 is given on the basis of whether the value in the counter C has become zero.

In the case where the counter C does not reach the predetermined number of the unreal lines, 1 is subtracted from the value in the counter C at step s12 followed by step s13 at which the signal indicative of the end of lines is sent and the procedure returns to step s8. In this event, upon detection of the end line, the lighting of the information lamp 9 and the sound of the buzzer urges the operator to replace the documents. In this way, a plurality of false signals are successively sent by way of a closed routine as shown by steps 8, 9, 10, 11, 12, 13 and 8, if no input is given by the sending key 8. At step s11, when the counter C has reached the predetermined number, that is, when the value in the counter C has become zero, the procedure proceeds to step s14 at which a signal indicative of the reset of the control is sent to terminate the transmission, and the information flag is rendered off at step 15.

On the other hand, when it is judged at step s10 that the transmission has been ordered by the operation of the sending key 8 until the counter C reaches the predetermined number, the procedure proceeds to step s16 at which the information flag is rendered off. The counter C is reset at step s17 and the signal indicative of the reset of the control is sent at step s18 to execute the flow required for transmitting the next document. The above described operation is henceforth repeated.

It is to be noted that CCITT (International Telegraph and Telephone Consultative Committee) recommends steps s13, s8 and s9 to complete within 5 seconds to which the number 7 in the counter C corresponds.

It is also to be noted that in this embodiment, although 7 is set in the counter C, the number of unreal lines to be initially set in the counter C is variable by controlling the number of the fillbits at step s9.

It is further to be noted that although the A4-sized document is designated in the above described embodiment, the document is not limited to this size.

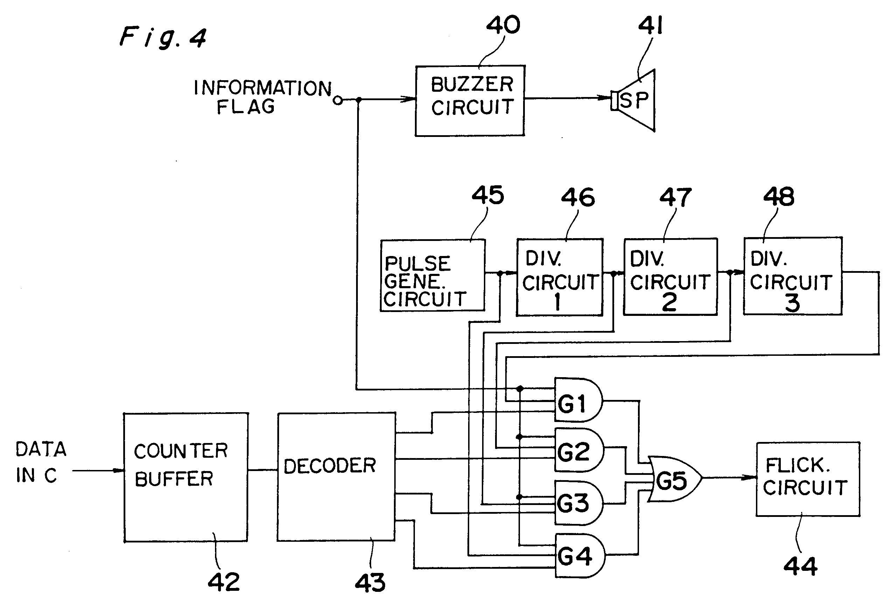

Fig. 4 depicts one example of an information means, in which the state of the information flag is inputted into a buzzer circuit 40 connected with a speaker 41 so that the buzzer may sounds by way of the speaker 41. In this information means, the value in the counter C is loaded into a counter buffer 42 whenever it has been altered. The value in the counter buffer 42 is inputted into and decoded in a decoder 43. The decoder 43 is connected to four AND gates G1 to G4 to render either one of them G1 to G4 effective. An output from each AND gate is inputted into an OR gate G5 connected to a lamp flickering circuit 44 to control the flickering of the information lamp 9. The information means contains a flickering pulse generating circuit 45 for generating a flickering pulse to actuate the information lamp 9. The flickering pulse generated in the flickering pulse generating circuit 45 is inputted into a first dividing circuit 46 and into the AND gate G4. An output from the first dividing circuit 46 is inputted into a second dividing circuit 47 and into the AND gate G3. An output from the second dividing circuit 47 is inputted into a third dividing circuit 48 and into the AND gate G2. The third dividing circuit 48 outputs a flickering pulse having the longest period into the AND gate G1.

Accordingly, as the value in the counter C approaches zero, the decoder 43 is switched from the AND gate G1 towards the AND gate G4 so that the flickering period may be gradually shortened.

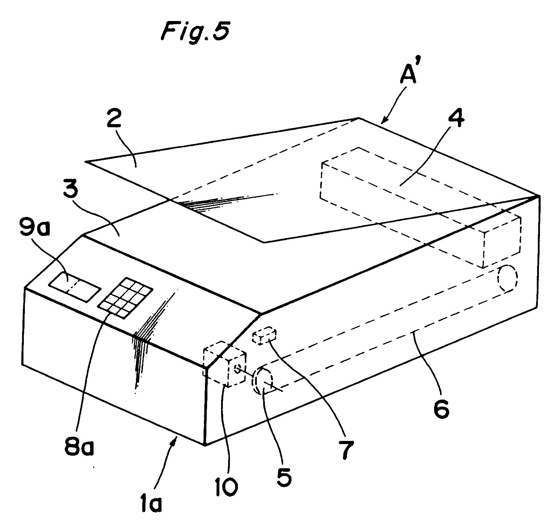

Fig. 5 depicts a modification A′ of the facsimile device A according to the first embodiment of the present invention, which is provided with an operation panel 8a having a sending key and ten-keys and a display panel 9a.

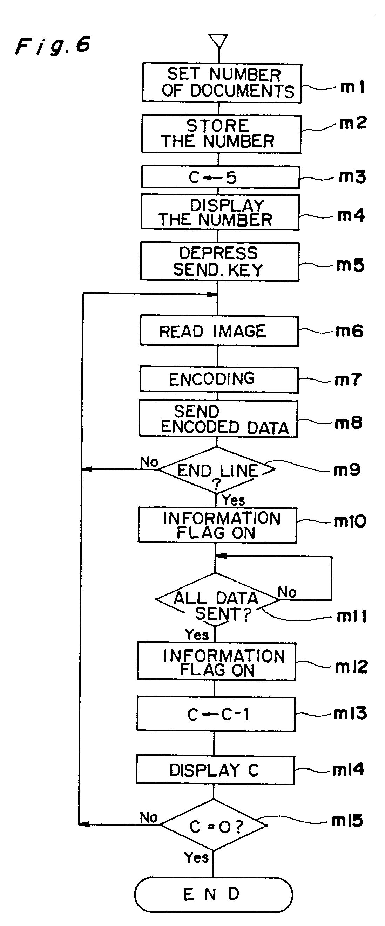

In the facsimile device A′ of Fig. 5, the number of documents can be initially set by using the ten-keys and can be indicated in the display panel 9a. In this case, the RAM 24 is provided with a page register for storing therein the number of documents to be set and a counter C′ for counting the number of documents which have already been transmitted. Other construction of this modification is substantially the same as that of the first embodiment described above. In the event of replacement of documents, the main control unit 20 executes the control as shown in a flow-chart of Fig. 6.

More specifically, after the main control unit 20 has detected the end line of a document to be transmitted, the information flag is turned on for the replacement of documents, which flag actuates the buzzer circuit and the lamp flickering circuit contained in the operation unit 22 and the display unit 19, respectively. Upon completion of the transmission of the image data stored in the buffer memory 15, 1 is subtracted from the number of documents set in advance so that the transmission may be resumed.

In the flow-chart of Fig. 6, the number of documents to be transmitted, for example, 5 is initially set at step m1 by using the ten-keys provided in the operation panel 8a and stored into the register at step m2. The content of the page register is inputted into the counter C′ at step m3 followed by step m4 at which the number stored in the page register i.e., 5 is indicated in the display panel 9a. A signal for transmitting the document is inputted at step m5 by depressing the sending key so that the transmission may be sequentially executed. At step m6, an image of one line of the document is read by the image reading unit 11. Data obtained by the image reading unit 11 are encoded by the encoding unit 14 at step m7 followed by step m8 at which the encoded data are sent to the circuit through the buffer memory 15, the transmission control unit 16, the MODEM 17 and the circuit control unit 18. It is judged at step m9 whether or not the data obtained by the image reading unit 11 is those of the end line. This judgment is executed on the basis of an output from the end line detecting sensor 7. If the judgment at step m9 is "NO", the procedure returns to step m6 so that the data indicative of respective lines of the document may be successively sent to the circuit. When the end line detecting sensor 7 has detected the end line at step m9, the procedure proceeds to step m10 at which the scanner 4 returns to its primary position, with the information flag being turned on. When the information flag has been turned on, the information lamp provided in the display panel 9a is lit up and the buzzer provided in the operation unit 22 sounds so that the operator may be urged to replace documents. The data of images which have already been encoded are once stored in the buffer memory 15 for the purpose of keeping sufficient time for the replacement of documents. If the end line is detected at step m9, the information flag is turned on at step m10 to send the encoded data remaining in the buffer memory 15. When all of the data in the buffer memory 15 have been completely sent to the circuit at step m11, the information flag is turned off at step m12 to stop the lighting of the information lamp and the sound of the buzzer. At step m13, 1 is subtracted from the number stored in the page register and, the value obtained by the subtraction is displayed in the display panel 9a at step m14. It is judged at step m15 whether or not the value in the page register is equal to zero. If the value in the page register is not equal to zero, the procedure returns to step m6 from which the aforementioned operation is repeated. If the value in the page register is equal to zero, it is judged that all of the documents have already been transmitted to the circuit and the procedure ends.

## Claims

1. A facsimile device for transmitting a plurality of original documents to a receiving station via a telephone circuit, the facsimile device comprising:
a) a document scanning plate (3) for stationarily positioning one of a plurality of original documents during a transmission process;
b) a sending key (8) for initiating transmission by the facsimile device of said one original document;
c) reading means (11) for reading image data contained in said one original document and for generating an output signal upon initating transmission of a document;
d) converting means (13, 14) for converting said image data to digital image data;
e) transmission means (17) for transmitting said digital image data converted by said converting means to the receiving station;
f) end line detecting means (7) for detecting an end line of said one original document being read;
g) false fillbit data signal generating means (s8) for generating a false fillbit data signal lasting a predetermined number of fillbit lines and being supplied to said transmission means in response to detecting the end line of each original document by said end line detecting means, for holding the telephone circuit during the transmission of said number of fillbit lines;
h) counting means (s11) for counting the number of transmitted fillbit lines; and
i) control means (s10, s11) for terminating the transmission when the value as counted by said counting means has reached said predetermined number of fillbit lines, or for stopping transmission of said fillbit lines and for returning to operation of said reading means for executing said transmission process for a subsequent document when said sending key is depressed before said counted value has reached said predetermined number.

2. The facsimile device as claimed in claim 1, further comprising an information means (9) for informing that the next document should be newly set on the document scanning plate on the basis of a signal indicative of the detection of the end line by said end line detecting means.

## Patentansprüche

1. Faksimilegerät zur Bildübertragung mehrerer Originaldokumente an eine Empfangsstation über einen Telefonkreis, das folgendes aufweist:
a) eine Dokumentenabtastplatte (3) zum stationären Positionieren eines von mehreren Originaldokumenten während eines Sendeprozesses;
b) eine Sendetaste (8) zum Auslösen eines Sendevorgangs durch das Faksimilegerät für ein erstes Originaldokument;
c) eine Leseeinrichtung (11) zum Lesen von Bilddaten in dem einen Originaldokument und zum Erzeugen eines Ausgangssignals beim Auslösen des Sendevorgangs für ein Dokument;
d) eine Umwandlungseinrichtung (13, 14) zum Umwandeln der Bilddaten in digitale Bilddaten;
e) eine Sendeeinrichtung (17) zum Senden der von der Umwandlungseinrichtung umgewandelten digitalen Daten an die Empfangsstation;
f) eine Endzeile-Erfassungseinrichtung (7) zum Erfassen der Endzeile des einen zu lesenden Originaldokuments;
g) eine Erzeugungseinrichtung (s8) zum Erzeugen eines Füllbitdaten-Ersatzsignals, das für eine vorgegebene Anzahl von Füllbitzeilen andauert und der Sendeeinrichtung auf das Erfassen der Endzeile jedes Originaldokuments durch die Endzeile-Erfassungseinrichtung hin zugeführt wird, um den Telefonkreis während des Sendens der Anzahl von Füllbitzeilen aktiv zu halten;
h) eine Zähleinrichtung (s11) zum Zählen der Anzahl gesendeter Füllbitzeilen; und
i) eine Steuereinrichtung (s10, s11) zum Beenden des Sendevorgangs, wenn der von der Zähleinrichtung gezählte Wert die vorgegebene Anzahl von Füllbitzeilen erreicht hat, oder zum Beenden des Sendens der Füllbitzeilen und zum Rückführen des Betriebs der Leseeinrichtung zum Ausführen des Sendeprozesses für ein anschließendes Dokument, wenn die Sendetaste betätigt wird, bevor der Zählwert die vorgegebene Zahl erreicht hat.

2. Faksimilegerät nach Anspruch 1, ferner mit einer Informationseinrichtung (9) zum Informieren darüber, daß das nächste Dokument neu auf die Dokumentenabtastplatte aufgelegt werden sollte, und zwar auf Grundlage eines Signals, das die Erfassung der Endzeile durch die Endzeile-Erfassungseinrichtung anzeigt.

## Revendications

1. Dispositif de fac-similé pour transmettre une pluralité de documents originaux vers un poste de réception via un circuit téléphonique, le dispositif de fac-similé comprenant :
a) un plateau d'exploration des documents (3) pour positionner de façon fixe l'un des documents originaux pendant un processus de transmission ;
b) une touche d'envoi (8) pour lancer la transmission effectuée par le dispositif de fac-similé dudit document original ;
c) un moyen de lecture (11) pour lire les données d'images contenues dans ledit document original et pour générer un signal de sortie au moment de lancer la transmission d'un document ;
d) un moyen de conversion (13, 14) pour convertir lesdites données d'images en données d'images numériques ;
e) un moyen de transmission (17) pour transmettre lesdites données d'images numériques converties par ledit moyen de conversion vers le poste de réception ;
f) un moyen de détection de fin de ligne (7) pour détecter une fin de ligne dudit document original qui est lu ;
g) un moyen générant de faux signaux de données de bit de remplissage (s8) pour générer un faux signal de donnée de bit de remplissage qui dure un nombre prédéterminé de lignes de bit de remplissage et qui est envoyé audit moyen de transmission en réponse à la détection de la fin de ligne de chaque document original par ledit moyen de détection de fin de ligne, pour garder la ligne téléphonique pendant la transmission dudit nombre de lignes de bits de remplissage ;
h) un moyen de comptage (s11) pour compter le nombre de lignes de bits de remplissage ; et
i) un moyen de commande (s10, s11) pour mettre fin à la transmission lorsque la valeur comptée par ledit moyen de comptage a atteint ledit nombre déterminé de lignes de bits de remplissage, ou pour arrêter la transmission desdites lignes de bits de remplissage et pour remettre en marche ledit moyen de lecture pour exécuter ledit processus de transmission pour un document ultérieur lorsque ladite touche d'envoi est pressée avant que ladite valeur comptée ait atteint ledit nombre prédéterminé.

2. Dispositif de fac-similé selon la revendication 1, comprenant en outre un moyen d'information (9) pour signaler que le document suivant doit être placé sur le plateau d'exploration des documents suite à un signal indiquant la détection de la fin de ligne par ledit moyen de détection de fin de ligne.
